# EUROPEAN PATENT APPLICATION

(11) **EP 4 068 129 A1**
(43) Date of publication of application: **05.10.2022**
(21) Application number: 20893681.5
(22) Date of filing: 25.11.2020
(51) Int. Cl.: G06F 21/60, G06F 21/62

(54) **ACCESS CONTROL METHOD, APPARATUS AND DEVICE, AND STORAGE MEDIUM**

(30) Priority: 28.11.2019 CN 201911191739
(71) Applicant: BOE Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); ZHANG, Qian, Beijing 100176 (CN); ZHAO, Yanqiu, Beijing 100176 (CN)
(74) Representative: Isarpatent
(86) International application number: PCT/CN2020/131375
(87) International publication number: WO 2021/104289

(57) **Abstract**

The present disclosure provides an access controlling method and apparatus, a device, and a storage medium. The access controlling method includes: acquiring data types of data from a device (101); and determining an access control policy of data of at least one data type of the data types, to control an application type of an application that accesses the data from the device (102); wherein the access control policy contains a correspondence relation between the data types and application types, and, for a target application type and a target data type that have the correspondence relation, an application of the target application type is configured to be permitted to access data of the target data type.

## Description

The present application claims the priority of the Chinese patent application filed on November 28th, 2019 with the application number of 201911191739.4, which is incorporated herein in its entirety by reference.

### TECHNICAL FIELD

The present disclosure relates to the technical field of communication, and particularly relates to an access controlling method and apparatus, a device, and a storage medium.

### BACKGROUND

In the technology of Internet of Things, data are usually required to be transmitted directionally according to the application type. For example, sensor data relevant to energy source are merely sent to an application relevant to energy source. Currently, the directional transmission of data has two modes, namely a subscription mode and an acquirement mode. However, both of those two modes involve the setting of the application on the resource access permissions. For example, in the subscription mode, the application is required to have the permission of creating a subscribing resource under a target resource. In the inquiring mode, the application is required to have the permission of inquiring a target resource.

### SUMMARY

In view of the above, an object of the present disclosure is to provide an access controlling method and apparatus, a device, and a storage medium.

According to the first aspect of the present disclosure, there is provided an access controlling method, wherein the method comprises: acquiring data types of data from a device; and determining an access control policy of data of at least one data type of the data types, to control an application type of an application that accesses the data from the device; wherein the access control policy contains a correspondence relation between the data types and application types, and, for a target application type and a target data type that have the correspondence relation, an application of the target application type is configured to be permitted to access data of the target data type.

Optionally, the method further comprises: receiving an application-template creating request sent by the application, wherein the application-template creating request contains the correspondence relation between the data types and the application types; and according to the application-template creating request, creating an application template for the application.

Optionally, the step of determining the access control policy of the data of the at least one data type of the data types comprises: according to the created application template, determining a first application type corresponding to a first data type of the data from the device; and configuring an application of the first application type to be permitted to access data of the first data type.

Optionally, the step of configuring the application of the first application type to be permitted to access the data of the first data type comprises: adding an identifier of the first application type into an access control policy of the data of the first data type.

Optionally, the step of determining the access control policy of the data of the at least one data type of the data types comprises: sending a notification containing the data types of the data from the device to a client, and determining, by the client, the access control policy according to a pre-stored application template; and receiving the access control policy sent by the client.

Optionally, the application template contains a plurality of application types, and at least one data type corresponding to each of the plurality of application types.

Optionally, the application template contains one application type, and at least one data type corresponding to the one application type.

Optionally, the method further comprises: receiving a registration request sent by the device, wherein the registration request contains the data types of the data from the device; and according to the registration request, performing registration of the device.

Optionally, the step of acquiring the data types of the data from the device comprises: acquiring the data types of the data from the device from the registration request.

Optionally, the method further comprises: receiving a container-resource creating request sent by the device, wherein the container-resource creating request contains the data types of the data from the device; and according to the container-resource creating request, creating a container for the device.

Optionally, the step of acquiring the data types of the data from the device comprises: acquiring the data types of the data from the device from the container-resource creating request.

Optionally, the method further comprises: before receiving the registration request sent by the device, receiving a request of the client of subscribing a newly registered device, or, receiving a request of the client of subscribing data of at least one of the data types.

Optionally, the method further comprises: receiving a data acquiring request sent by the application, wherein the data acquiring request contains a second data type of data requested to be acquired; according to the access control policy, determining whether a second application type of the application corresponds to the second data type; and in response to correspondence between the second application type and the second data type, determining that the application of the second application type is permitted to access the data of the second data type.

According to the second aspect of the present disclosure, there is provided an access controlling method, wherein the method comprises: receiving a notification sent by a server, wherein the notification contains data types of data from a device that has been registered to the server; according to a pre-stored application template, determining an application type corresponding to one of the data types, wherein the application template contains a correspondence relation between application types and data types; and sending to the server an access control policy of data of at least one of the data types of the device; wherein the access control policy contains a correspondence relation between the data types and application types, and, for a target application type and a target data type that have the correspondence relation, an application of the target application type is configured to be permitted to access data of the target data type.

Optionally, the method further comprises: sending a resource subscribing request to the server, wherein the resource subscribing request is configured for requesting to subscribe a device that has been newly registered to the server.

Optionally, the method further comprises: sending a resource subscribing request to the server, wherein the resource subscribing request is configured for requesting to subscribe data of at least one of the data types.

According to the third aspect of the present disclosure, there is provided an access controlling apparatus, wherein the apparatus comprises: an acquiring module configured for acquiring data types of data from a device; and a first determining module configured for determining an access control policy of data of at least one data type of the data types, to control an application type of an application that accesses the data from the device; wherein the access control policy contains a correspondence relation between the data types and application types, and, for a target application type and a target data type that have the correspondence relation, an application of the target application type is configured to be permitted to access data of the target data type.

According to the fourth aspect of the present disclosure, there is provided an access controlling apparatus, wherein the apparatus comprises: a receiving module configured for receiving a notification sent by a server, wherein the notification contains data types of data from a device that has been registered to the server; a second determining module configured for, according to a pre-stored application template, determining an application type corresponding to one of the data types, wherein the application template contains a correspondence relation between application types and data types; and a sending module configured for sending to the server an access control policy of data of at least one of the data types of the device; wherein the access control policy contains a correspondence relation between the data types and application types, and, for a target application type and a target data type that have the correspondence relation, an application of the target application type is configured to be permitted to access data of the target data type.

According to the fifth aspect of the present disclosure, there is provided an electronic device, wherein the electronic device comprises a memory, storing a computer program; and a processor configured for executing the computer program to implement the access controlling method according to any one of the embodiments in the first aspect and the second aspect of the present disclosure.

According to the sixth aspect of the present disclosure, there is provided a non-transient computer-readable storage medium, wherein the non-transient computer-readable storage medium stores a computer instruction that is executable by a computer, and the computer instruction is configured for causing the computer to implement the access controlling method according to any one of the embodiments in the first aspect and the second aspect of the present disclosure.

### BRIEF DESCRIPTION OF THE DRAWINGS

In order to more clearly illustrate the technical solutions of the embodiments of the present disclosure or the prior art, the figures that are required to describe the embodiments or the prior art will be briefly introduced below. Apparently, the figures that are described below are merely embodiments of the present disclosure, and a person skilled in the art can obtain other figures according to these figures without paying creative work.
Fig. 1 is a flow chart of the access controlling method according to an illustrative embodiment of the present disclosure;
Fig. 2 is a flow chart of the access controlling method according to another illustrative embodiment of the present disclosure;
Fig. 3 is a signaling flow chart of the access controlling method according to an illustrative embodiment of the present disclosure;
Fig. 4 is another signaling flow chart of the access controlling method according to an illustrative embodiment of the present disclosure;
Fig. 5 is a block diagram of the access controlling apparatus according to an illustrative embodiment of the present disclosure; and
Fig. 6 is a block diagram of the access controlling apparatus according to another illustrative embodiment of the present disclosure.

### DETAILED DESCRIPTION

In order to make the objects, the technical solutions and the advantages of the present disclosure clearer, the present disclosure will be described in further detail below with reference to the particular embodiments and the drawings.

It should be noted that, unless defined otherwise, the technical terminologies or scientific terminologies used in the embodiments of the present disclosure should have the meanings generally understood by a person skilled in the art of the present disclosure. The words used herein such as "first" and "second" do not indicate any sequence, quantity or priority, but are merely intended to distinguish different components. The words such as "comprise" or "include" mean that the element or article preceding the word encompasses the elements or articles and the equivalents thereof that are listed subsequent to the word, but do not exclude other elements or articles. The words such as "connect" or "couple" are not limited to physical or mechanical connections, but may include electric connections, regardless of direct connections or indirect connections. The words such as "upper", "lower", "left" and "right" are merely intended to indicate relative positions, and if the absolute position of the described item has changed, the relative positions might also be correspondingly changed.

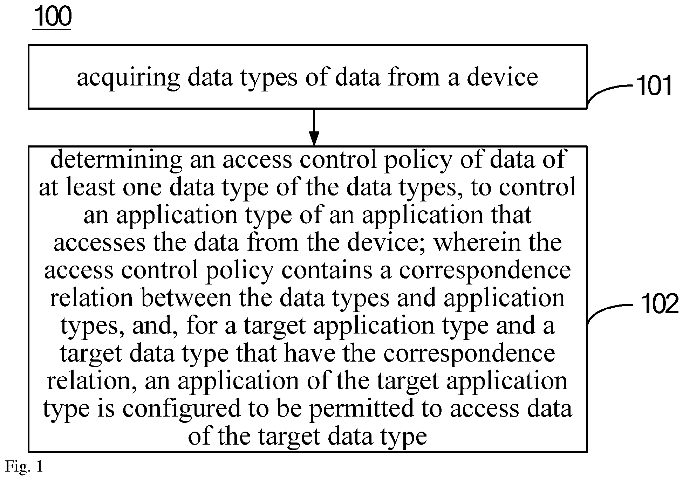

Fig. 1 is a flow chart of the access controlling method 100 according to an illustrative embodiment of the present disclosure. The access controlling method 100 may be implemented by a server, for example, may be implemented by a smart-home managing server. As shown in Fig. 1, the method 100 comprises the following steps:
Step 101: acquiring data types of data from a device.

In the step 101, the device may be, for example, a sensor, or an electronic device provided with at least one type of sensor. The device may have the function of collecting data. According to an embodiment, the device may be registered to the server. Particularly, before the step 101, the method 100 further comprises receiving a registration request of the device, and according to the registration request, performing registration of the device. For example, a registration request of the device that requests to be registered to the server is received, the registration request may contain the information for indicating the device identity, such as an identifier of the device. As the received registration request of the device may contain the data type of the data of the device, the data type of the data of the device may be acquired from the registration request. If the registration request does not contain the data type of the data of the device, the server may acquire the data type of the data of the device from other messages that the device sends to it, which case will be described in detail below with reference to the embodiments.

According to an embodiment, the data type includes one data type or a plurality of data types. The data type of the data of the device is the data type of the data that the device is able to provide, and will be referred to for short as the data type of the device below. Taking a smart watch as an example, it can provide the health data, the position data, the movement data and the multimedia data of the user and the energy-source data of the device itself (for example, the current residual capacity of the smart watch), and therefore those data types are the data types of the smart watch.

Step 102: determining an access control policy of data of at least one data type of the data types, to control an application type of an application that accesses the data from the device. According to an embodiment, the access control policy contains a correspondence relation between the data types and application types, and, for a target application type and a target data type that have the correspondence relation, an application of the target application type is configured to be permitted to access data of the target data type.

In the step 102, after the server has learned that a new device is being registered, and has learned the data type of the data that the device can provide, the server may determine the application type corresponding to the data type according to a pre-stored application template. Alternatively, the server may send the data type of the device to a client, and, after the client has learned the data type of the device that has been registered to the server, the client determines the application type corresponding to the data type according to a pre-stored application template. The application template may pre-define the application types corresponding to the data types. For example, one application type may correspond to a plurality of data types, or one data type may correspond to a plurality of application types. The application types may, for example, according to the functions of the applications, be classified into: an energy-source application, a health application, a safety application, a social-contact application, an image processing application, a transaction application, a multimedia application and so on.

In the access controlling method according to the embodiment of the present disclosure, after a device has been registered to the server, the data type of the device is learned, and the access control policy of the data of at least one of the data types of the device is determined according to the data type, to determine the application types of the applications that can access the data of the target data type of the device, whereby, after a new device has been registered to the server, it is not required to enable sequentially the access permissions to the data of the specified types of the device for various types of applications, thereby increasing the efficiency of access controlling.

According to an embodiment, the access controlling method 100 may further comprise: receiving an application-template creating request sent by the application, wherein the application-template creating request contains an application type and the data type corresponding to the application type, and according to the application-template creating request, creating an application template for the application. According to an embodiment, the application template may contain a plurality of application types, and at least one data type corresponding to each of the plurality of application types. According to an embodiment, the application template may also contain one application type, and at least one data type corresponding to the one application type.

According to an embodiment, the application may be a plurality of applications; for example, it may include an energy-source managing application, a health application and a smart-home managing application (as an example of the client). The server takes a smart-home managing server as an example, and the device takes a sensor as an example. According to an embodiment, the energy-source managing application and the health application may individually send an application-template creating request to the smart-home managing server, and the smart-home managing server checks the application-template creating request and creates an application template individually for the energy-source managing application and the health application. The application template contains the application types and the data types. The smart-home managing server sends an application-template creating response to the energy-source managing application and the health application. The smart-home managing server may be pre-provided with the correspondence relation between the device type and the data type, and thus can check the application-template creating request according to the correspondence relation, to determine the validity of the request.

According to an embodiment, the step of determining the access control policy of the data of at least one of the data types of the device may comprise: according to the created application template, determining a first application type corresponding to a first data type of the device, and configuring an application of the first application type to be permitted to access data of the first data type of the device. According to an embodiment, the server may add an identifier of the first application type into an access control policy of the data of the first data type. As an example, taking the case as an example in which the device is a smart watch, the data types that the smart watch can provide include physiological data (as an example of the above-described first data type), and the template of a certain health application defines that the data types corresponding to the health application include movement data and physiological data. Therefore, it can be determined that an application whose application type is a health application (as an example of the above-described first application type) is an application that is permitted to access the physiological data of the smart watch, and therefore an identifier of the health application may be added into the access control policy of the data of the smart watch.

According to an embodiment, the access controlling method 100 may further comprise: receiving a data acquiring request sent by the application, wherein the data acquiring request contains a second data type of data requested to be acquired; according to the access control policy, determining whether a second application type of the application corresponds to the second data type; and in response to correspondence between the second application type and the second data type, determining that the application of the second application type is permitted to access the data of the second data type of the device. According to an embodiment, the energy-source managing application sends to the smart-home managing server a request (as an example of the data acquiring request) of acquiring the resource of the sensor (as an example of the above-described device), and checks the application according to the access control policy of the data of the sensor. If it can be determined, according to the access control policy of the data of the sensor, that the second application type corresponds to the second data type that it requests to acquire, then a response of acquiring the sensor resource is sent to the energy-source managing application. Moreover, in order that the server can save the data of the device, the device may, after the data have been collected, report to the server the data that it collects. On the basis of that, the server, when have determined according to the access control policy of the data of the device that the data acquiring request is valid, may send the data requested by the application to the application.

According to an embodiment, the access controlling method 100 may further comprise: before receiving the registration request of the device, receiving a request of the client (the smart-home managing application) of subscribing a device that has been newly registered to the server. In another embodiment, the method may comprise receiving a request of the client of subscribing data of at least one of the data types. If the request of the client of subscribing the device that has been newly registered to the server is received, after the new device has been registered to the server, the server may send the data type of the device to the client. In another embodiment, if the request of the client of subscribing the data of at least one of the data types is received, after the new device has been registered to the server, the server may send the data type of the device to the client.

According to an embodiment, the access controlling method 100 may further comprise: after the data type from the device has been acquired, sending a notification containing the data types of the data from the device to a client, and determining, by the client, the access control policy according to a pre-stored application template. According to an embodiment, the application type may be determined by using the data type based on a pre-stored application template. The client, after acquiring the application type corresponding to the data type, sends an updating request to the server. The updating request contains the application type of an application that is permitted to access the data of at least one of the data types of the device.

According to an embodiment, the server may acquire the data type of the device according to the data type contained in the registration request of the device. According to an embodiment, the server may receive a container-resource creating request sent by the device. The container-resource creating request may contain the data type of the device. According to an embodiment, the server, according to the container-resource creating request, create a container for the device, and acquires the data type of the device from the container-resource creating request. For example, the sensor, while sending the registration request to the smart-home managing server, may carry the data type of the sensor in the registration request, or, may further carry the ID of the sensor. As another example, the sensor, after being successfully registered to the smart-home managing server, sends a container-resource creating request to the smart-home managing server, wherein the request may carry the data type of the sensor.

As another example, the smart-home managing server, after receiving the registration request of the sensor, acquires the data type of the sensor from the request, and sends the data type of the sensor to the smart-home managing application, whereby the smart-home managing application can, according to the application template, determine the application type of the application of at least one of the data types that are able to access the sensor, to determine the access control policy of the sensor according to the application type. As another example, the smart-home managing server, after receiving the container-resource creating request of the sensor, acquires the data type of the sensor from the request, and sends the data type of the sensor to the smart-home managing application, whereby the smart-home managing application can, according to the application template, determine the application type of the application of at least one of the data types that are able to access the sensor, to determine the access control policy of the sensor according to the application type.

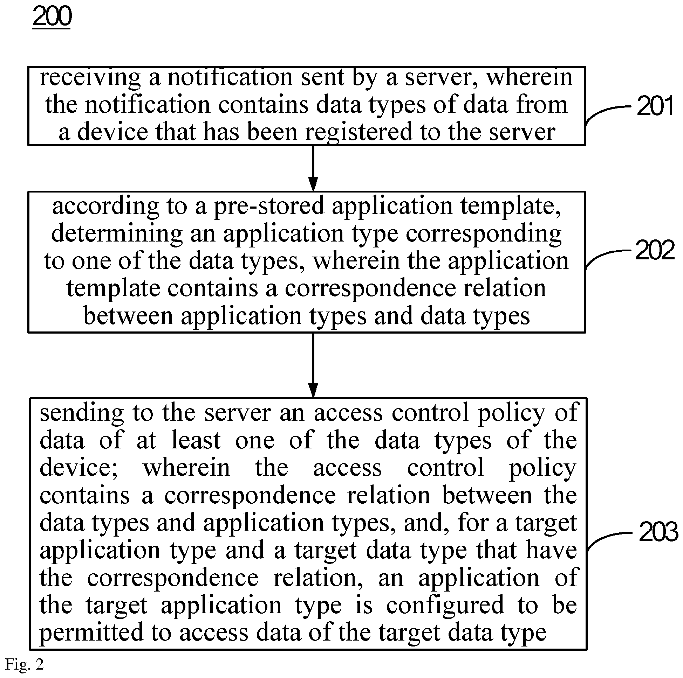

Fig. 2 is a flow chart of the access controlling method 200 according to another illustrative embodiment of the present disclosure. The access controlling method 200 may be implemented by a client, and the client may be, for example, a smart-home managing application. The method 200 comprises the following steps:
Step 201: receiving a notification sent by a server, wherein the notification contains data types of data from a device that has been registered to the server.

According to an embodiment, after the device has sent a registration request to the server, or the device has sent a container-resource creating request to the server, the server may send to the client a data-type information carried in the registration request or the container-resource creating request in the form of a notification. According to an embodiment, before a new device has been registered to the server, the client may send a resource subscribing request to the server, wherein the resource subscribing request is configured for requesting to subscribe the device that has been newly registered to the server, or configured for requesting to subscribe data of at least one of the data types.

Step 202: according to a pre-stored application template, determining an application type corresponding to one of the data types, wherein the application template contains a correspondence relation between application types and data types.

Step 203: sending to the server an access control policy of data of at least one of the data types of the device; wherein the access control policy contains a correspondence relation between the data types and application types, and, for a target application type and a target data type that have the correspondence relation, an application of the target application type is configured to be permitted to access data of the target data type. The client, for example, pre-stores an application template locally. The application template defines a correspondence relation between the application types and the data types. The correspondence relation may, for example, be a relation of one to plurality or plurality to one. The application template may be sent to the client by the server.

According to an embodiment, the application template contains a plurality of application types, and at least one data type corresponding to each of the plurality of application types. In another embodiment, the application template contains one application type, and at least one data type corresponding to the one application type. The step of sending, by the client, the subscription request to the server may comprise: sending to the server a request of subscribing a device that has been newly registered to the server, or sending to the server a request of subscribing data of at least one of the data types.

In the access controlling method according to the embodiment of the present disclosure, after a device has been registered to the server, the data type of the device is learned, and the access control policy of at least one of the data types of the device is determined according to the data type, to determine the application types of the applications that can access the data of the target data type of the device, whereby, after a new device has been registered to the server, it is not required to enable sequentially the access permissions to the data of the specified types of the device for various types of applications, thereby increasing the efficiency of access controlling.

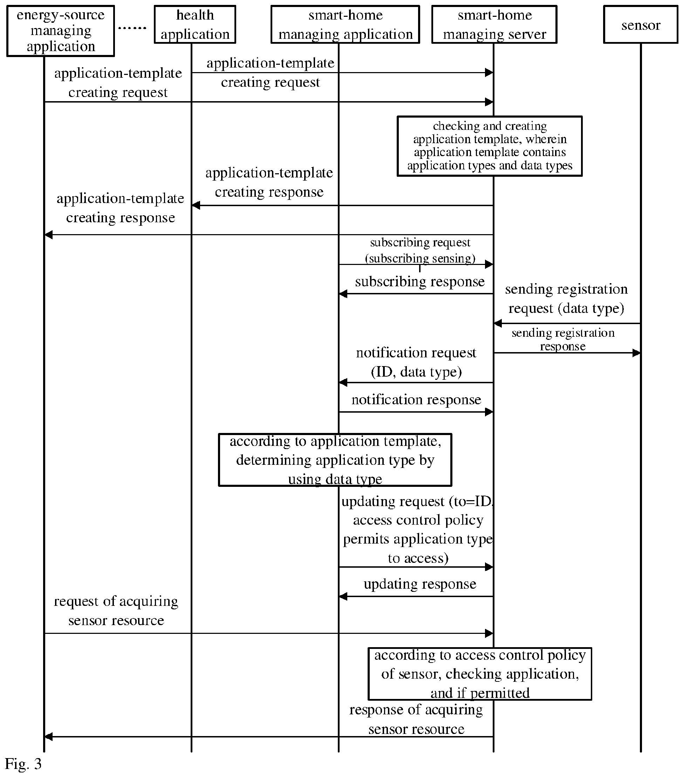

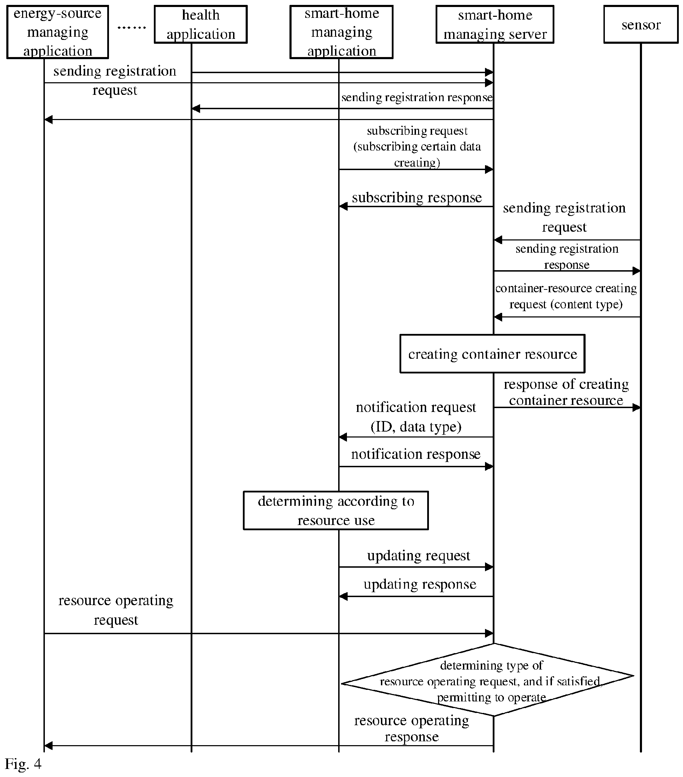

Each of Figs. 3 and 4 shows a signaling flow chart of the access controlling method according to an illustrative embodiment of the present disclosure. The access controlling methods 100 and 200 according to the embodiments of the present disclosure will be illustratively described below with reference to Figs. 3 and 4 respectively.

The access controlling method shown in Fig. 3 comprises the following steps:
receiving, by a smart-home managing server, an application-template creating request sent by an application, wherein the application template may contain a correspondence relation between application types and data types;
by the smart-home managing server, checking the application-template creating request, and, after the checking has been verified, creating the application template, wherein according to an embodiment, the smart-home managing server may also send the application-template creating request to a smart-home managing application for checking;
sending, by the smart-home managing server, an application-template creating response to the application;
by the smart-home managing application, sending a subscription request to the smart-home managing server, and subscribing a new sensor for accessing into the system;
by the smart-home managing server, sending a subscription response to the smart-home managing application;
sending, by a sensor, a registration request to the smart-home managing server, wherein the registration request contains the data type of the sensor;
sending, by the smart-home managing server, a registration response to the sensor;
sending, by the smart-home managing server, a notification request to the smart-home managing application, wherein the request contains the sensor ID and the data type of the sensor;
sending, by the smart-home managing application, a notification response to the smart-home managing server;
by the smart-home managing application, according to the application template, determining the corresponding application type according to the data type of the sensor (the determined application type may include one or more application types), and sending an updating request to the smart-home managing server, for updating the access control policy of the sensor, to permit the application of the corresponding application type to access the data of the specified data type of the sensor; and
by the smart-home managing server, receiving a resource acquiring request of the application, and by the smart-home managing server, according to the access control policy of the sensor, checking the application, and, if the checking has been verified, then returning a successful-resource-acquisition response to the application.

The access controlling method shown in Fig. 4 comprises the following steps:
receiving, by a smart-home managing server, a registration request sent by an application;
sending, by the smart-home managing server, a registration response to the application;
by a smart-home managing application, sending a subscription request to the smart-home managing server, and subscribing a resource of a certain data type;
by the smart-home managing server, sending a subscription response to the smart-home managing application;
by a sensor, sending the registration request to the smart-home managing server and receiving the registration response of the smart-home managing server;
sending, by a sensor, a container-resource creating request to the smart-home managing server, wherein the request contains the data type;
sending, by the smart-home managing server, a resource creating response to the sensor;
sending, by the smart-home managing server, a notification request to the smart-home managing application, wherein the request contains the sensor ID and the data type of the sensor;
by the smart-home managing application, according to the data type, determining the application type that is permitted to access the data type;
by the smart-home managing application, sending an updating request to the smart-home managing server, for updating the access control policy of the sensor, whereby the application of the application type matching with the data type of the sensor can access the data of the data type;
receiving, by the smart-home managing application, an updating response sent by the smart-home managing server;
sending, by an energy-source managing application, a resource operating request to the smart-home managing server; and
by the smart-home managing server, determining whether the application type of the energy-source managing application satisfies the requirements of the access control policy of the sensor, if yes, permitting the access, and if no, denying the access.

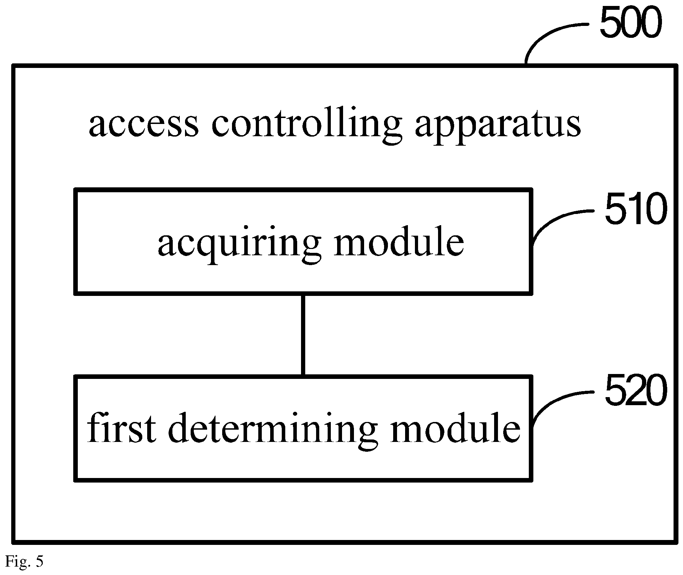

Fig. 5 is a block diagram of the access controlling apparatus 500 according to an illustrative embodiment of the present disclosure. As shown in Fig. 5, the apparatus 500 comprises:
an acquiring module 510 configured for acquiring data types of data from a device, wherein the data type may comprise one or more data types; and
a first determining module 520 configured for determining an access control policy of data of at least one data type of the data types, to control an application type of an application that accesses the data from the device; wherein the access control policy contains a correspondence relation between the data types and application types, and, for a target application type and a target data type that have the correspondence relation, an application of the target application type is configured to be permitted to access data of the target data type.

According to an embodiment, the access controlling apparatus 500 may further comprise a creating module configured for receiving an application-template creating request sent by the application, wherein the application-template creating request contains the correspondence relation between the data types and the application types; and according to the application-template creating request, creating an application template for the application.

According to an embodiment, the application template contains a plurality of application types, and at least one data type corresponding to each of the plurality of application types. Alternatively, the application template contains one application type, and at least one data type corresponding to the one application type.

According to an embodiment, the first determining module 520 may, according to the application template, determine a first application type corresponding to a first data type of the device, determine that an application that satisfies the first application type is permitted to access the data of the first data type of the device, and add an identifier of the first application type into an access control policy of the first data type.

According to an embodiment, the first determining module 520 may send the data type of the device to the client, and receive the access control policy sent by the client.

According to an embodiment, the access controlling apparatus 500 may further comprise an accessing module configured for receiving a data acquiring request sent by the application, wherein the data acquiring request contains a second data type of data requested to be acquired; according to the access control policy, determining whether a second application type of the application corresponds to the second data type; and in response to correspondence between the second application type and the second data type, determining that the application of the second application type is permitted to access the data of the second data type of the device.

According to an embodiment, the access controlling apparatus 500 may further comprise a subscription receiving module configured for, before receiving the registration request of the device, receiving a request of the client of subscribing a device that has been newly registered to the server, or, receiving a request of the client of subscribing data of at least one of the types.

According to an embodiment, the acquiring module 510 is configured for acquiring the data type of the device from the registration request.

According to an embodiment, the access controlling apparatus 500 may further comprise a container creating module configured for receiving a container-resource creating request sent by the device, wherein the container-resource creating request contains the data type of the device, and according to the container-resource creating request, creating a container for the device. The acquiring module 510 may acquire the data type of the device from the container-resource creating request.

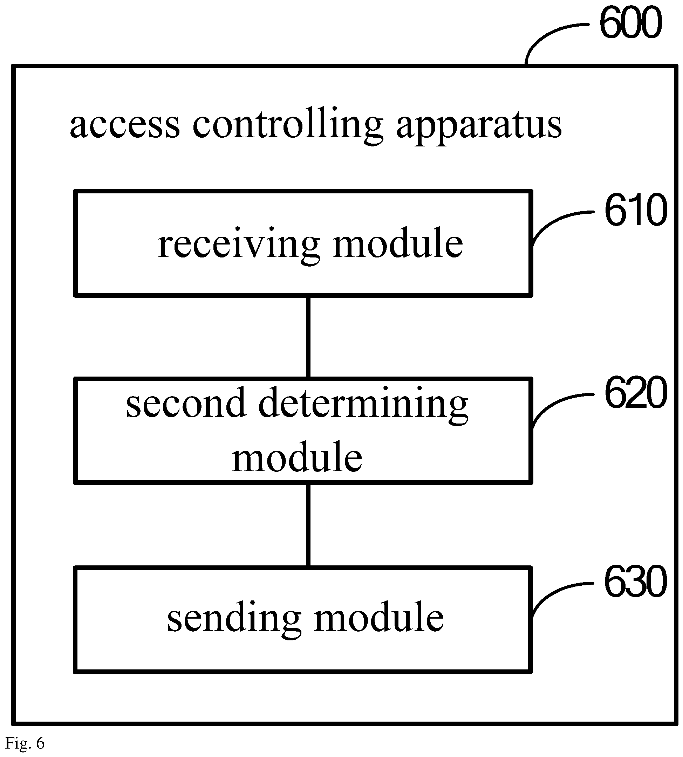

Fig. 6 is a block diagram of the access controlling apparatus 600 according to another illustrative embodiment of the present disclosure. As shown in Fig. 6, the apparatus 600 comprises:
a receiving module 610 configured for receiving a notification sent by a server, wherein the notification contains data types of data from a device that has been registered to the server;
a second determining module 620 configured for, according to a pre-stored application template, determining an application type corresponding to one of the data types, wherein the application template contains a correspondence relation between application types and data types; and
a sending module 630 configured for sending to the server an access control policy of data of at least one of the data types of the device; wherein the access control policy contains a correspondence relation between the data types and application types, and, for a target application type and a target data type that have the correspondence relation, an application of the target application type is configured to be permitted to access data of the target data type.

According to an embodiment, the application template contains a plurality of application types, and at least one data type corresponding to each of the plurality of application types. Alternatively, the application template contains one application type, and at least one data type corresponding to the one application type. A subscription sending module is configured for sending to the server a request of subscribing a device that has been newly registered to the server, or, sending to the server a request of subscribing data of at least one of the data types.

The present disclosure further provides an electronic device, wherein the electronic device comprises a memory, a processor and a computer program that is stored in the memory and is executable on the processor, wherein the processor, when executing the program, implements the access controlling method according to any one of the above items.

The present disclosure further provides a non-transient computer-readable storage medium, wherein the non-transient computer-readable storage medium stores a computer instruction, and the computer instruction is configured for causing a computer to implement the access controlling method according to any one of the above items.

It should be noted that the method according to the embodiments of the present disclosure may be implemented by a single one device, for example, one computer or server and so on. The method according to the present embodiment may also be applied in a distributed scene, and be completed by a plurality of devices in cooperation. In such a distributed scene, one device among the plurality of devices may perform merely one or more steps of the method according to the embodiments of the present disclosure, and the plurality of devices interact to complete the method.

The apparatus according to the embodiments is used to implement the corresponding method according to the above embodiments, and has the advantageous effects of the corresponding process embodiments, which is not discussed here further.

A person skilled in the art should understand that the discussion on any of the above embodiments is merely illustrative, and are not intended to imply that the scope (including the claims) of the present disclosure is limited to those examples. With the concept of the present disclosure, the embodiments or the technical features of different embodiments may be combined, the steps may be implemented in any random order, and many other variations of different aspects of the present disclosure as stated above may exist, which are not provided in detail for brevity.

In addition, in order to simplify the explain and the discussion, and in order not to make the present disclosure difficult to understand, the provided drawings may or may not show the well-known power/ground connection of the integrated circuit (IC) chip with other components. Moreover, the apparatus may be shown in the form of a block diagram, so as to prevent causing the present disclosure to be difficult to understand, and that takes into consideration the fact that the details of the embodiments with respect to those block-diagram apparatuses highly depend on the platform of implementing the present disclosure (i.e., those details should be completely within the scope of comprehension of a person skilled in the art). As the particular details (for example, the electric circuits) have been stated to describe the illustrative embodiments of the present disclosure, it is apparent to a person skilled in the art that the present disclosure may be implemented without those particular details or when those particular details have been changed. Therefore, those descriptions should be considered as illustrative rather than limitative.

Although the present disclosure has been described with reference to the particular embodiments of the present disclosure, according to the above description, many substitutions, modifications and variations of those embodiments will be apparent to a person skilled in the art. For example, other memory architectures (for example, dynamic RAM (DRAM)) may use the discussed embodiments.

The embodiments of the present disclosure are intended to encompass all of such substitutions, modifications and variations that fall within the broad scope of the appended claims. Therefore, any omissions, modifications, equivalent substitutions and improvements that are made within the spirit and the principle of the present disclosure should fall within the protection scope of the present disclosure.

## Claims

1. An access controlling method, **characterized in that**, the method comprises:
acquiring data types of data from a device; and
determining an access control policy of data of at least one data type of the data types, to control an application type of an application that accesses the data from the device;
wherein the access control policy contains a correspondence relation between the data types and application types, and, for a target application type and a target data type that have the correspondence relation, an application of the target application type is configured to be permitted to access data of the target data type.

2. The method according to claim 1, **characterized in that**, the method further comprises:
receiving an application-template creating request sent by the application, wherein the application-template creating request contains the correspondence relation between the data types and the application types; and
according to the application-template creating request, creating an application template for the application.

3. The method according to claim 2, **characterized in that**, the step of determining the access control policy of the data of the at least one data type of the data types comprises:
according to the created application template, determining a first application type corresponding to a first data type of the data from the device; and
configuring an application of the first application type to be permitted to access data of the first data type.

4. The method according to claim 3, **characterized in that**, the step of configuring the application of the first application type to be permitted to access the data of the first data type comprises:
adding an identifier of the first application type into an access control policy of the data of the first data type.

5. The method according to claim 2, **characterized in that**, the step of determining the access control policy of the data of the at least one data type of the data types comprises:
sending a notification containing the data types of the data from the device to a client, and determining, by the client, the access control policy according to a pre-stored application template; and
receiving the access control policy sent by the client.

6. The method according to any one of claims 2 to 5, **characterized in that**, the application template contains a plurality of application types, and at least one data type corresponding to each of the plurality of application types.

7. The method according to any one of claims 2 to 5, **characterized in that**, the application template contains one application type, and at least one data type corresponding to the one application type.

8. The method according to claim 1, **characterized in that**, the method further comprises:
receiving a registration request sent by the device, wherein the registration request contains the data types of the data from the device; and
according to the registration request, performing registration of the device.

9. The method according to claim 8, **characterized in that**, the step of acquiring the data types of the data from the device comprises:
acquiring the data types of the data from the device from the registration request.

10. The method according to claim 1, **characterized in that**, the method further comprises:
receiving a container-resource creating request sent by the device, wherein the container-resource creating request contains the data types of the data from the device; and
according to the container-resource creating request, creating a container for the device.

11. The method according to claim 10, **characterized in that**, the step of acquiring the data types of the data from the device comprises:
acquiring the data types of the data from the device from the container-resource creating request.

12. The method according to claim 8, **characterized in that**, the method further comprises:
before receiving the registration request sent by the device, receiving a request of the client of subscribing a newly registered device, or, receiving a request of the client of subscribing data of at least one of the data types.

13. The method according to any one of claims 1 to 12, **characterized in that**, the method further comprises:
receiving a data acquiring request sent by the application, wherein the data acquiring request contains a second data type of data requested to be acquired;
according to the access control policy, determining whether a second application type of the application corresponds to the second data type; and
in response to correspondence between the second application type and the second data type, determining that the application of the second application type is permitted to access the data of the second data type.

14. An access controlling method, **characterized in that**, the method comprises:
receiving a notification sent by a server, wherein the notification contains data types of data from a device that has been registered to the server;
according to a pre-stored application template, determining an application type corresponding to one of the data types, wherein the application template contains a correspondence relation between application types and data types; and
sending to the server an access control policy of data of at least one of the data types of the device;
wherein the access control policy contains a correspondence relation between the data types and application types, and, for a target application type and a target data type that have the correspondence relation, an application of the target application type is configured to be permitted to access data of the target data type.

15. The method according to claim 14, **characterized in that**, the method further comprises:
sending a resource subscribing request to the server, wherein the resource subscribing request is configured for requesting to subscribe a device that has been newly registered to the server.

16. The method according to claim 14, **characterized in that**, the method further comprises:
sending a resource subscribing request to the server, wherein the resource subscribing request is configured for requesting to subscribe data of at least one of the data types.

17. An access controlling apparatus, **characterized in that**, the apparatus comprises:
an acquiring module configured for acquiring data types of data from a device; and
a first determining module configured for determining an access control policy of data of at least one data type of the data types, to control an application type of an application that accesses the data from the device; wherein the access control policy contains a correspondence relation between the data types and application types, and, for a target application type and a target data type that have the correspondence relation, an application of the target application type is configured to be permitted to access data of the target data type.

18. An access controlling apparatus, **characterized in that**, the apparatus comprises:
a receiving module configured for receiving a notification sent by a server, wherein the notification contains data types of data from a device that has been registered to the server;
a second determining module configured for, according to a pre-stored application template, determining an application type corresponding to one of the data types, wherein the application template contains a correspondence relation between application types and data types; and
a sending module configured for sending to the server an access control policy of data of at least one of the data types of the device; wherein the access control policy contains a correspondence relation between the data types and application types, and, for a target application type and a target data type that have the correspondence relation, an application of the target application type is configured to be permitted to access data of the target data type.

19. An electronic device, **characterized in that**, the electronic device comprises:
a memory, storing a computer program; and
a processor configured for executing the computer program to implement the access controlling method according to any one of claims 1 to 13 or claims 14 to 16.

20. A non-transient computer-readable storage medium, **characterized in that**, the non-transient computer-readable storage medium stores a computer instruction that is executable by a computer, and the computer instruction is configured for causing the computer to implement the access controlling method according to any one of claims 1 to 13 or claims 14 to 16.
